Europäisches Patentamt

(19) European Patent Office

Office européen des brevets

(11) Veröffentlichungsnummer : **0 087 512**
**B1**

(12) **EUROPÄISCHE PATENTSCHRIFT**

(45) Veröffentlichungstag der Patentschrift :
25.03.87

(51) Int. Cl.⁴ : **F 16 F 15/12, B 60 K 17/02**

(21) Anmeldenummer : **82111618.3**

(22) Anmeldetag : **14.12.82**

(54) Verbrennungsmotor und Getriebe umfassende Anordnung.

(30) Priorität : 26.02.82 DE 3206837

(43) Veröffentlichungstag der Anmeldung :
07.09.83 Patentblatt 83/36

(45) Bekanntmachung des Hinweises auf die Patenterteilung : 25.03.87 Patentblatt 87/13

(84) Benannte Vertragsstaaten :
AT FR GB IT SE

(56) Entgegenhaltungen :
FR-A- 2 341 068
GB-A- 2 062 777
US-A- 2 328 518
US-A- 2 776 556
US-A- 2 982 150
US-A- 3 979 973

(73) Patentinhaber : GETRAG Getriebe- und Zahnradfabrik GmbH
Postfach 449 Solitudeallee 24
D-7140 Ludwigsburg (DE)

(72) Erfinder : Knödel, Gunter
Gaussweg 3
D-7130 Mühlacker (DE)

(74) Vertreter : Patentanwälte Kohler - Schwindling - Späth
Hohentwielstrasse 41
D-7000 Stuttgart 1 (DE)

## Beschreibung

Die Erfindung betrifft eine Verbrennungsmotor und Getriebe umfassende Anordnung, insbesondere für Kraftfahrzeuge, bei der die in Verlängerung der Kurbelwelle des Motors angeordnete Antriebswelle des Getriebes mit dem ein Schwungrad tragenden Ende der Kurbelwelle verbunden und in die Kette der das Motordrehmoment auf das Getriebe übertragenden Glieder ein drehelastisches Dämpfungsglied eingeschaltet ist.

Beim Antrieb von Kraftfahrzeugen mittels Verbrennungsmotoren, insbesondere mittels wenige Zylinder aufweisender Kolbenmaschinen, treten Ungleichförmigkeiten in der Drehgeschwindigkeit auf, die durch Gas- und Massenkräfte bedingt sind. Diese Ungleichförmigkeiten werden je nach Bauart und Arbeitsweise des Motors durch ein auf der Kurbelwelle des Motors angeordnetes Schwungrad und die Ausbildung der Kurbelwelle mehr oder weniger ausgeglichen. Der bisher erreichte Ausgleich ist jedoch in jedem Falle unvollkommen. Besonders starke Ungleichförmigkeiten treten auf, wenn der Motor im Leerlauf mit geringen Drehzahlen betrieben wird, weil dann einerseits der Betrieb des Motors besonders instabil ist und andererseits ausgleichende Massenkräfte, vom Schwungrad abgesehen, fehlen.

Die Ungleichförmigkeiten äußern sich in Drehschwingungen, welche auf das Getriebe und den gesamten Antriebsstrang übertragen werden. Als Folge davon entstehen insbesondere bei den formschlüssig arbeitenden Getriebeelementen, nämlich Zahnrädern und Kupplungen, Rasselgeräusche, die über Gehäuse- und Karosserieteile nach außen treten und als unangenehm und störend empfunden werden, und zwar in besonderem Maße dann, wenn Resonanzbereiche durchfahren werden. Man hat bisher versucht, diesen Erscheinungen durch Anbringen von Torsionsdämpfern im Antriebsstrang sowie durch die Aufhängung der Anordnung in Gummielementen zu begegnen. Dabei ist es bekannt, drehelastische Dämpfungsglieder in der Mitnehmerscheibe einer zwischen Kurbelwelle und Getriebewelle angeordneten Trennkupplung anzubringen. Außerdem ist es bekannt, an der Kurbelwelle Dämpfungselemente anzubringen, die auf Drehbeschleunigungen ansprechen und solchen Drehbeschleunigungen entgegenwirken. Üblicherweise befinden sich solche Dämpfungselemente an demjenigen Ende der Kurbelwelle, das dem Ende entgegengesetzt ist, an dem sich das Schwungrad und die mit drehelastischen Dämpfungsgliedern versehene Kupplung befinden.

Aus der US-A-2 982 150 ist es bekannt, die Schwungscheibe einer Kupplung mit der Kurbelwelle über eine flexible Platte zu verbinden. Diese Platte ist jedoch nur in Axialrichtung und nicht in der Drehrichtung nachgiebig, so daß sie nur axiale Vibrationen der Kurbelwelle von dem nachfolgenden Antriebsstrang fernhalten kann.

Wie bereits erwähnt, lassen sich durch die vorstehend beschriebenen, bekannten Maßnahmen die durch Ungleichförmigkeiten der Drehgeschwindigkeit des Motors bedingten Drehschwingungen nur in sehr begrenztem Maße dämpfen. Die bekannten Dämpfungsglieder sind nur in einem begrenzten Schwingungsbereich wirksam. Insbesondere bei niedrigen Frequenzen nimmt ihre Wirksamkeit stark ab, so daß bei leerlaufendem Motor die unangenehmen Geräusche besonders stark in Erscheinung treten. Diese Drehschwingungen und die damit verbundenen Geräusche setzen bisher dem Bestreben, die Leerlaufdrehzahl von Kraftfahrzeugantrieben aus Gründen der Kraftstoffersparnis unter die bisher üblichen Drehzahlen herabzusetzen, als unüberwindlich angesehene Grenzen.

Demgemäß liegt der Erfindung die Aufgabe zugrunde, eine Verbrennungsmotor und Getriebe umfassende Anordnung der eingangs genannten Art so auszubilden, daß die Dämpfung von Drehschwingungen besonders bei niedrigen Frequenzen bedeutend verbessert wird und daher auch die Möglichkeit besteht, die Leerlaufdrehzahl einer solchen Anordnung stark herabzusetzen, ohne daß die dadurch bemerkbar werdenden Schwingungen und Geräusche ein als erträglich angesehenes Maß überschreiten.

Diese Aufgabe wird nach der Erfindung dadurch gelöst, daß die Kurbelwelle an der dem Motor zugewandten Seite des Schwungrades geteilt ist und die Teilstücke der Kurbelwelle durch ein drehelastisches Zwischenglied miteinander verbunden sind.

An der dem Motor zugewandten Seite des Schwungrades steht in einem solchen Aggregat ausreichend Platz zur Verfügung, um dort drehelastische Zwischenglieder anzubringen, die einen über den gesamten Drehzahlbereich sehr wirksamen Torsionsdämpfer bilden. Dabei ist von besonderem Vorteil, daß dieser Torsionsdämpfer zwischen Schwungrad und Motor angeordnet ist, so daß die vom Motor ausgehenden Drehschwingungen überhaupt nicht mehr auf das Schwungrad übertragen werden. Damit ist die Ausgleichswirkung des Schwungrades bedeutend verbessert, und es wird auf das Getriebe die gleichförmige Bewegung des durch die Dämpfungsglieder vom Motor isolierten Schwungrades übertragen. Infolgedessen können auch bei den formschlüssig arbeitenden Getriebeelementen keine Rasselgeräusche mehr entstehen, die über Gehäuse- und Karosserieteile nach außen treten und die bisher als so störend empfunden wurden. Infolgedessen wird durch die Erfindung eine Verbesserung des Schwingungsverhaltens und der Geräuschbildung bei einer Verbrennungsmotor und Getriebe umfassenden Anordnung erzielt, die es insbesondere ermöglicht, die Leerlaufdrehzahl des Verbrennungsmotors weit unter das bisher übliche Maß abzusenken, und die außerdem zu einer erhöhten Lebensdauer des Getriebes führt, weil die die Geräusche verursachenden, durch die Drehschwingungen bedingten, stoßartigen Belastungen des Getriebes vermieden werden, die neben der Geräuschbildung auch einen erhöhten Verschleiß zur Folge haben.

Bei einer bevorzugten Ausführungsform der Erfindung ist das das Schwungrad tragende Teilstück der Kurbelwelle in einem mit dem Getriebegehäuse verbundenen Lager gelagert. Diese Ausbildung der erfindungsgemäßen Anordnung hat den Vorteil, daß das das Schwungrad tragende Teilstück der Kurbelwelle im Getriebegehäuse zur Antriebswelle des Getriebes genau fluchtend gelagert werden kann, so daß einerseits die Laufeigenschaften der Anordnung verbessert werden und andererseits die Fertigung erleichtert wird, weil nicht mehr die im Motorgehäuse gelagerte Kurbelwelle mit der im Getriebegehäuse gelagerten Antriebswelle des Getriebes beim Zusammenbau von Motor und Getriebe genau zum Fluchten gebracht werden müssen. Vielmehr kann ein gewisser Versatz zwischen Antriebswelle des Getriebes und dem im Motorgehäuse gelagerten Teilstück der Kurbelwelle in Kauf genommen werden, weil ein solcher Versatz durch die drehelastischen Zwischenglieder ohne weiteres aufgenommen werden kann. Bei einer solchen Anordnung kann das Lager für das das Schwungrad tragende Teilstück der Kurbelwelle vorteilhaft in einem am Ende des Getriebegehäuses starr befestigten Zwischenflansch angeordnet sein.

Die Tatsache, daß zwischen dem im Motorgehäuse gelagerten Teilstück der Kurbelwelle und dem mit dem Getriebe verbundenen Teilstück der Kurbelwelle ein gewisser Versatz möglich ist, bietet weiterhin die Möglichkeit, in weiterer Ausgestaltung der Erfindung die Motor- und Getriebegehäuse selbst ebenfalls durch elastische Glieder miteinander zu verbinden. Zwar ist aus der US-A-2 328 518 die Anordnung elastischer Glieder zwischen Teilen von Motor- und Getriebegehäusen an sich bekannt, jedoch ist deren Wirkung begrenzt, weil dadurch die oben behandelte Übertragung von Drehschwingungen über den Antriebsstrang nicht vermieden wird. In Verbindung mit der Erfindung wird jedoch durch diese Maßnahme zusätzlich verhindert, daß Schwingungen vom Motorgehäuse auf das Getriebegehäuse übertragen werden. Vielmehr werden in das Motorgehäuse eingeleitete Schwingungen zusätzlich gedämpft. Diese Maßnahme trägt daher zur weiteren Schwingungsdämpfung und Geräuschunterdrückung erheblich bei.

Ein weiterer besonderer Vorteil der erfindungsgemäßen Anordnung besteht darin, daß sie den üblich gewordenen Zusammenbau von Verbrennungsmotor und Getriebe nicht stört. So läßt es die Erfindung ohne weiteres zu, daß das Ende der Antriebswelle des Getriebes in dem das Schwungrad tragenden Teilstück der Kurbelwelle in der gleichen Weise gelagert wird, wie bisher das Ende der Antriebswelle in dem das Schwungrad tragende Ende der einteiligen Kurbelwelle gelagert wurde. Diese Art der Lagerung kann jedoch bei der erfindungsgemäßen Anordnung dadurch gegenüber den herkömmlichen Anordnungen bedeutend verbessert und erleichtert werden, daß, wie oben angegeben, das das Schwungrad tragende Teilstück der Kurbelwelle im Getriebegehäuse selbst gelagert wird und daher Fluchtungsfehler leicht ausgeschaltet werden können.

Ebenso ist es auch bei der erfindungsgemäßen Anordnung möglich, daß zwischen Verbrennungsmotor und Getriebe eine Trennkupplung angeordnet ist, die eine auf der Getriebewelle axial verschiebliche und mit dem Schwungrad zusammenwirkende Mitnehmerscheibe aufweist. Auch für diese Anordnung ist es vorteilhaft, wenn das Schwungrad im Getriebegehäuse gelagert ist und die zusammenwirkenden Teile der Kupplung mit hoher Genauigkeit konzentrisch zueinander gelagert sind. Weiterhin ist von Vorteil, daß bei einer solchen Anordnung die bisher üblichen Dämpfungsglieder in der Mitnehmerscheibe der Kupplung entfallen können. Hierdurch läßt sich nicht nur die Kupplung einfacher und raumsparender ausbilden, sondern es wird auch das Trägheitsmoment der ohne integrierten Dämpfer ausgeführten Mitnehmerscheibe der Kupplung bedeutend vermindert, wodurch das Schaltverhalten synchronisierter Getriebe verbessert wird. Zu den Massen, die beim Schalten zum Zweck der Synchronisation zu beschleunigen oder zu verzögern sind, gehört die Mitnehmerscheibe der Kupplung, deren Trägheitsmoment einen erheblichen Anteil der Synchronisationsarbeit beansprucht. Daher ist die durch die Erfindung mögliche Verminderung dieses Trägheitsmomentes von erheblicher Bedeutung.

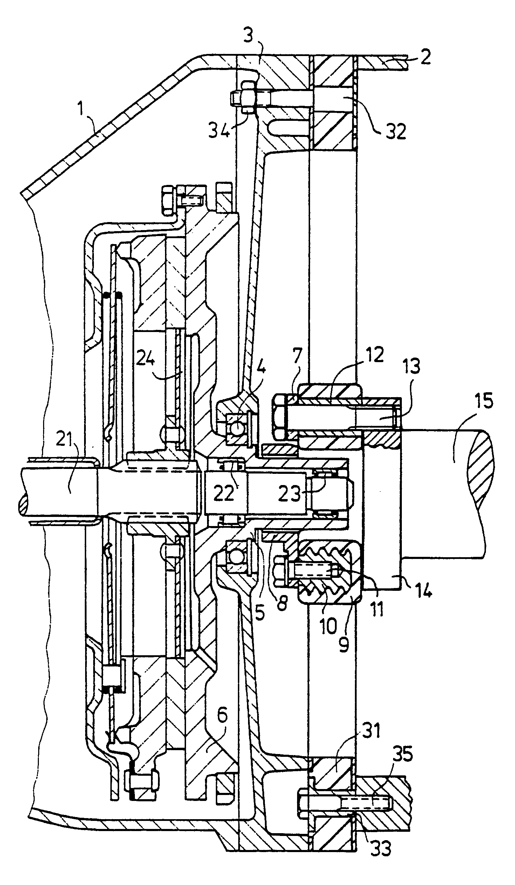

Die Erfindung wird im folgenden anhand des in der Zeichnung dargestellten Ausführungsbeispieles näher beschrieben und erläutert. Die Zeichnung zeigt einen Längsschnitt durch die aneinandergrenzenden Abschnitte eines Verbrennungsmotors und eines Getriebes, die zu einer gemeinsamen Anordnung miteinander verbunden sind.

Bei der in der Zeichnung dargestellten Anordnung ist das Gehäuse 1 eines Schaltgetriebes an seinem dem Gehäuse 2 eines Verbrennungsmotors zugewandten Ende durch einen Zwischenflansch 3 abgeschlossen, der im Bereich seiner Mitte ein Kugellager 4 trägt. In diesem Kugellager 4 ist eine Hohlwelle 5 drehbar gelagert, die an ihrem dem nicht näher dargestellten Getriebe zugewandten Ende ein Schwungrad 6 trägt. Dieses Schwungrad 6 befindet sich demgemäß auf der dem Inneren des Getriebegehäuses 1 zugewandten Seite des Zwischenflansches 3.

Auf das andere Ende der Hohlwelle 5, das in Richtung auf das Motorgehäuse 2 aus dem Lager 4 herausragt, ist ein Winkelring 7 aufgesetzt und durch eine Keilverzahnung 8 mit der Hohlwelle 5 drehfest verbunden. An dem flanschartigen Abschnitt des Winkelringes 7 ist ein ringförmiges Schwingmetall-Element 9 befestigt, das auf seinem Umfang verteilt einvulkanisierte Gewindebuchsen 10 aufweist, in die Bohrungen im Winkelring 7 durchdringende Schrauben 11 eingedreht sind. Abwechselnd zu den Gewindebuchsen 10 sind in dem Schwingmetall-Element 9 einvulkanisierte Hülsen 12 angeordnet, die von Schraubbolzen 13 durchsetzt werden, die ihrerseits mit ihrem ein Gewinde tragenden Ende in einen Flansch 14 eingreifen, der sich am Ende einer Welle 15 befindet. Bei dieser Welle 15 handelt es sich um ein Teilstück der Kurbelwelle des nicht näher dargestellten Motors, die im Motorgehäuse 2 in bekannter Weise gelagert ist. Diese Kurbelwelle wird ergänzt durch das von der Hohlwelle 5 gebildete, weitere Teilstück, welches das Schwungrad 6 trägt. Demgemäß besteht bei dem dargestellten Ausführungsbeispiel die Kurbelwelle des Motors aus den Teilstücken 15 und 8, von denen das Teilstück 8 das Schwungrad 6 trägt, und die beide durch ein drehelastisches Zwischenglied miteinander verbunden sind, das von dem ringförmigen Schwingmetall-Element 9 gebildet wird.

Die Antriebswelle 21 des Getriebes 1 ist bei dem dargestellten Ausführungsbeispiel in herkömmlicher Weise in dem ihm zugewandten Ende der Kurbelwelle, nämlich in der ein Teilstück der Kurbelwelle bildenden Hohlwelle 5 mittels zweier Rollenlager 22, 23 drehbar gelagert. Dabei ist von besonderem Vorteil, daß die Hohlwelle 5 in dem mit dem Getriebegehäuse 1 starr verbundenen Zwischenflansch 3 gelagert ist, so daß das die Hohlwelle 5 tragende Lager 4 zu den die Antriebswelle 21 tragenden, im Getriebegehäuse 1 befestigten Lagern genau zum Fluchten gebracht werden kann. Das genaue Fluchten von Antriebswelle 21 und Hohlwelle 5 ist auch für die Anbringung einer Kupplung besonders günstig, die in üblicher Weise eine auf der Antriebswelle 21 des Getriebes verschiebbar, aber unverdrehbar geführte Kupplungsscheibe 24 umfaßt, die in bekannter Weise mit einem ihr zugewandten, ebenen Flächenabschnitt des Schwungrades 6 zusammenwirkt. Der Aufbau solcher, mit der Schwungscheibe des Motors zusammenwirkenden Trennkupplungen ist an sich bekannt und braucht daher hier nicht im einzelnen erläutert zu werden. Es sei jedoch erwähnt, daß infolge der Anordnung eines drehelastischen Zwischengliedes zwischen den Teilstücken 15 und 5 der Kurbelwelle keine Notwendigkeit mehr besteht, die Mitnehmerscheibe zu teilen und mit eingebauten Dämpfungsgliedern zu versehen. Dadurch wird der Aufbau der Kupplung vereinfacht und ihr Platzbedarf vermindert. Von besonderem Vorteil ist, daß die Masse der Mitnehmerscheibe der Trennkupplung durch den Fortfall solcher Dämpfungsglieder erheblich vermindert wird, so daß die beim Schalten durch die Synchronisationseinrichtungen des Getriebes zu beschleunigenden bzw. verzögernden Massen erheblich vermindert werden. Dadurch wird das Schalten erleichtert und die Lebensdauer der Synchronisationseinrichtungen erhöht.

Bei dem dargestellten Ausführungsbeispiel sind das Getriebegehäuse 1 und das Motorgehäuse 2 nicht unmittelbar starr miteinander verbunden, sondern es ist zwischen diesen beiden Gehäusen ein weiteres Dämpfungsglied 31 in Form eines ringförmigen Schwingmetall-Elementes angeordnet. Auf den Umfang dieses Schwingmetall-Elementes verteilt sind abwechselnd Stehbolzen 32 und Hülsen 33 einvulkanisiert, von denen die Stehbolzen 32 Bohrungen in dem starr mit dem Getriebegehäuse 1 verbundenen Zwischenflansch 3 durchdringen und mittels Schraubmuttern 34 in diesen Bohrungen befestigt sind. In die Hülsen 33 sind Schraubbolzen 35 eingesetzt, welche in entsprechende Gewindebohrungen im Motorgehäuse 2 eingedreht sind. Auf diese Weise ist auch eine drehelastische und schwingungsdämpfende Verbindung zwischen Motorgehäuse 2 und Getriebegehäuse 1 hergestellt, so daß eine Übertragung von Drehschwingungen vom Motor auf das Getriebe weitgehend ausgeschlossen ist. Für den gleichförmigen Lauf des Getriebes ist es dabei von besonderem Vorteil, daß das ausgleichende Schwungrad 6 sich auf der Getriebeseite der Dämpfungsglieder befindet, so daß die ausgleichende Wirkung voll dem ruhigen Gleichlauf des Getriebes zugute kommt.

Es versteht sich, daß die Erfindung nicht auf das dargestellte Ausführungsbeispiel beschränkt ist, sondern Abweichungen davon möglich sind, ohne den Rahmen der Erfindung zu verlassen. So ist es für die schwingungsdämpfende Wirkung der erfindungsgemäßen Anordnung ohne Bedeutung, in welcher Weise die Antriebswelle des Getriebes mit der Kurbelwelle des Motors verbunden ist. Anstelle einer Trennkupplung kann daher ohne weiteres jede andere Anordnung zur Übertragung eines Drehmomentes benutzt werden. Grundsätzlich könnte die Getriebewelle mit dem das Schwungrad tragenden Teilstück der Kurbelwelle auch einteilig ausgebildet sein, so daß das Schwungrad tatsächlich auf der Antriebswelle des Getriebes angebracht und damit Bestandteil des Getriebes ist, und die Antriebswelle des Getriebes mit der Kurbelwelle des Motors über das drehelastische Zwischenglied verbunden ist. In der vorstehenden Beschreibung wurde die Hohlwelle 5 nur deshalb als Teilstück der Kurbelwelle betrachtet, weil das Schwungrad üblicherweise ein Bestandteil des Motors und auf der Kurbelwelle angeordnet ist.

Für die Erfindung ist es auch nicht unbedingt erforderlich, daß Motorgehäuse und Getriebegehäuse ebenfalls durch schwingungsdämpfende Glieder miteinander verbunden ist, auch wenn es einen besonderen Vorteil der Erfindung ausmacht, daß eine solche Verbindung möglich ist. Weiterhin versteht es sich, daß drehelastische Zwischenglieder beliebiger Ausbildung sowohl zur Verbindung der Teilstücke der Kurbelwelle als auch zur Verbindung der Gehäuse verwendet werden können, sofern sie nur in der Lage sind, die im Betrieb auftretenden Drehmomente sicher zu übertragen und die im Betrieb auftretenden Schwingungen ausreichend zu dämpfen. So können insbesondere statt der beschriebenen, ringförmigen Schwingmetalle eine Anzahl einzelner Schwingmetall-Elemente verwendet werden. Die Verwendung einzelner Schwingmetall-Elemente kann insbesondere zur Verbindung der Gehäuse günstig sein, weil dann die Abstände zwischen den einzelnen Schwingmetall-Elementen eine gute Durchlüftung der Gehäuse im Bereich zwischen Motor und Getriebe gewährleisten.

**Patentansprüche**

1. Verbrennungsmotor und Getriebe umfassende Anordnung, insbesondere für Kraftfahrzeuge, bei der die in Verlängerung der Kurbelwelle (5, 15) des Motors angeordnete Antriebswelle (21) des Getriebes mit dem ein Schwungrad (6) tragenden Ende der Kurbelwelle (5, 15) verbunden und in die Kette der das Motordrehmoment auf das Getriebe übertragenden Glieder ein drehelastisches Dämpfungsglied eingeschaltet ist, dadurch gekennzeichnet, daß die Kurbelwelle (5, 15) an der dem Motor zugewandten Seite des Schwungrads (6) geteilt ist und die Teilstücke der Kurbelwelle durch ein drehelastisches Zwischenglied (9) miteinander verbunden sind.

2. Anordnung nach Anspruch 1, dadurch gekennzeichnet, daß das das Schwungrad (6) tragende Teilstück (5) der Kurbelwelle in einem mit dem Getriebegehäuse (1) verbundenen Lager (4) gelagert ist.

3. Anordnung nach Anspruch 2, dadurch gekennzeichnet, daß das Lager (4) für das das Schwungrad (6) tragende Teilstück (5) der Kurbelwelle in einem am Ende des Getriebegehäuses (1) starr befestigten Zwischenflansch (3) angeordnet ist.

4. Anordnung nach einem der vorhergehenden Ansprüche, dadurch gekennzeichnet, daß die Motor- und Getriebegehäuse (1, 2) durch elastische Glieder (31) miteinander verbunden sind.

5. Anordnung nach einem der vorhergehenden Ansprüche, dadurch gekennzeichnet, daß das Ende der Antriebswelle (21) des Getriebes in dem das Schwungrad (6) tragenden Teilstück (5) der Kurbelwelle gelagert ist.

6. Anordnung nach einem der vorhergehenden Ansprüche, dadurch gekennzeichnet, daß zwischen Verbrennungsmotor und Getriebe eine Trennkupplung angeordnet ist, die eine auf der Antriebswelle (21) des Getriebes axial verschiebliche und mit dem Schwungrad (6) zusammenwirkende Mitnehmerscheibe (24) aufweist.

**Claims**

1. Arrangement comprising internal combustion engine and gearbox, particularly for motor vehicles, wherein the drive shaft (21) of the gearbox, disposed as a prolongation of the crankshaft (5, 15) of the engine, is connected to that end of the crankshaft (5, 15) which carries a flywheel (6) and comprising a torsionally elastic damping member incorporated into the chain of members which transmit the engine torque to the gearbox, characterised in that, on the side of the flywheel (6) which is towards the engine, the crankshaft (5, 15) is divided, the parts of the crankshaft being connected to each other by a torsionally elastic intermediate member (9).

2. Arrangement according to Claim 1, characterised in that the part (5) of the crankshaft which carries the flywheel (6) is mounted in a bearing (4) connected to the gearbox casing (1).

3. Arrangement according to Claim 2, characterised in that the bearing (4) for the part (5) of the crankshaft which carries the flywheel (6) is disposed in an intermediate flange (3) fixed rigidly at one end of the gearbox casing (1).

4. Arrangement according to one of the preceding Claims, characterised in that the engine and gearbox casing (1, 2) are connected to each other by elastic members (31).

5. Arrangement according to one of the preceding Claims, characterised in that the end of the drive shaft (21) of the gearbox is mounted in that part (5) of the crankshaft which carries the flywheel (6).

6. Arrangement according to one of the preceding Claims, characterised in that there is between the internal combustion engine and the gearbox a separable coupling which carries a drive plate (24) co-operating with the flywheel (6) and adapted for axial displacement on the drive shaft (21) of the gearbox.

**Revendications**

1. Dispositif comprenant un moteur à combustion et une transmission, en particulier pour véhicules automobiles, dans lequel l'arbre de transmission (21) disposé dans le prolongement du vilebrequin (5, 15) du moteur est relié à une extrémité du vilebrequin portant un volant (6) et dans lequel dans la chaîne des éléments transmettant le moment rotatif du moteur à la transmission est engagé un élément de compensation élastique en rotation, caractérisé en ce que le vilebrequin (5, 15) est divisé en section sur le côté du volant (6) tourné vers le moteur et que les sections du vilebrequin sont reliées ensemble par un élément intermédiaire (9) élastique en rotation.

2. Dispositif selon la revendication 1, caractérisé en ce que la section (5) du vilebrequin portant le volant (6) est située dans un roulement (4) relié au boîtier de la transmission (1).

3. Dispositif selon la revendication 2, caractérisé en ce que le roulement (4), pour la section (5) du vilebrequin portant le volant (6), est disposé dans une bride intermédiaire (3) fixée de manière rigide à l'extrémité du boitier de la transmission (1).

4. Dispositif selon l'une des revendications précédentes, caractérisé en ce que les boîtiers du moteur et de la transmission (1, 2) sont reliés entre eux par un élément élastique (31).

5. Dispositif selon l'une des revendications précédentes, caractérisé en ce que l'extrémité de l'arbre de transmission (21) est située dans la section (5) du vilebrequin portant le volant (6).

6. Dispositif selon l'une des revendications précédentes, caractérisé en ce que, entre le moteur à combustion et la transmission est disposé un couplage débrayable, qui présente un disque entraîneur (24) mobile axialement sur l'axe de transmission (21) et coopère avec le volant (6).

6